# FASCICULE DE BREVET EUROPEEN

(11) **EP 3 898 805 B1**
(45) Date de publication et mention de la délivrance du brevet: **14.08.2024**
(21) Numéro de dépôt: 19845708.7
(22) Date de dépôt: 17.12.2019
(51) Int. Cl.: C08K 3/04, C08L 95/00

(54) **ENROBÉ AVEC COKE DE PÉTROLE**
PETROLKOKS ENTHALTENDE BESCHICHTUNG
COATING COMPRISING PETROLEUM COKE

(30) Priorité: 18.12.2018 FR 1873124
(43) Date de publication de la demande: 27.10.2021
(73) Titulaire: TotalEnergies OneTech, 92400 Courbevoie (FR)
(72) Inventeur: COLLIAT, Romain, 38300 Ruy-Montceau (FR); LAPALU, Laurence, 69100 Villeurbanne (FR)
(74) Mandataire: Bandpay & Greuter
(86) Numéro de dépôt international: PCT/FR2019/053133
(87) Numéro de publication internationale: WO 2020/128313

(56) Documents cités:
- GB-A- 1 285 895

## Description

### Domaine de l'invention

La présente invention concerne des enrobés comprenant une teneur élevée en coke de pétrole, des procédés de préparation de tels enrobés et leur utilisation comme couche de chaussée ou comme revêtement de sol, ou dans diverses applications industrielles notamment pour préparer un revêtement d'étanchéité, une membrane ou une couche d'imprégnation.

### Arrière-plan technique

Le coke de pétrole (ou « *petcoke* ») est un co-produit issu du raffinage de pétrole. Différentes applications ont été développées afin de valoriser ce produit. Ainsi, il est à l'heure actuelle souvent utilisé en tant que combustible, ou pour la fabrication d'électrodes. L'utilisation du coke de pétrole a également été envisagée dans des applications routières.

Par exemple, les documents FR 1591491, GB 1285895 et US 3,802,898 décrivent des enrobés hydrocarbonés comprenant un agrégat et un liant bitumineux, et pouvant comprendre en tant que filler une faible proportion de coke de pétrole.

Les documents US 4,028,293 et US 4,000,095 concernent des matériaux comprenant un composant minéral, un composant polymérique et un composant hydrocarboné tel que, par exemple, un bitume, du goudron ou du coke de pétrole.

Le document IN 2704/DEL/2008 décrit du bitume additionné de caoutchouc recyclé et de coke de pétrole.

Les documents FR 0817510 et GB 0475387 décrivent des émulsions bitumineuses pouvant comprendre du coke de pétrole en tant que charge colorante minérale.

Il existe un réel besoin de fournir un enrobé destiné à l'industrie routière comprenant de bonnes propriétés d'isolation thermique et acoustique, qui soit également recyclable et économique et qui puisse agir comme puits de carbone.

### Résumé de l'invention

L'invention concerne en premier lieu un enrobé comprenant au moins 50 % en poids de granulats, au moins 8 % en poids de coke de pétrole et au moins un liant hydrocarboné.

Selon des modes de réalisation, le rapport pondéral du coke de pétrole sur le liant hydrocarboné est supérieur ou égal à 1,8, de préférence supérieur ou égal à 2.

Selon des modes de réalisation, l'enrobé comprend de 8 à 45 % en poids, de préférence de 10 à 30 % en poids, de coke de pétrole.

Selon des modes de réalisation, le coke de pétrole présente une taille maximale de particule inférieure ou égale à 20 mm, de préférence inférieure ou égale à 5 mm.

Selon des modes de réalisation, le coke de pétrole présente une taille maximale de particule inférieure à 63 µm.

Selon des modes de réalisation, les granulats sont choisis dans le groupe constitué des granulats grossiers ayant une taille de particule de 6,3 mm ou supérieure, des granulats moyens ayant une taille de particule supérieure à 2 mm et inférieure à 6,3 mm, des granulats fins ayant une taille de particule de 63 µm à 2 mm, des fines ayant une taille de particule inférieure à 63 µm et des combinaisons de ceux-ci.

Selon des modes de réalisation, l'enrobé comprend de 50 à 90 % en poids, de préférence de 60 à 85 % en poids de granulats.

Selon des modes de réalisation, l'enrobé comprend en tant que granulats :
- de 0 à 90 % en poids, de préférence de 5 à 65 % en poids, de granulats grossiers ayant une taille de particule de 6,3 mm ou supérieure ;
- de 0 à 90 % en poids, de préférence de 5 à 65 %, en poids de granulats moyens ayant une taille de particule supérieure à 2 mm et inférieure à 6,3 mm ;
- de 0 à 70 % en poids, de préférence de 5 à 65 %, en poids de granulats fins ayant une taille de particule de 63 µm à 2 mm ; et
- de 0 à 40 % en poids, de préférence de 0 à 20 % en poids, de fines ayant une taille de particule inférieure à 63 µm ;
par rapport au poids total de l'enrobé.

Selon des modes de réalisation, l'enrobé comprend de 2 à 20 % en poids, de préférence de 5 à 15 % en poids de liant hydrocarboné.

Selon des modes de réalisation, le liant hydrocarboné est choisi dans le groupe constitué des bitumes, des brais, des liants clairs et des mélanges de ceux-ci.

Selon des modes de réalisation, l'enrobé comprend en outre de 0 à 20 % en poids d'additifs, de préférence choisis dans le groupe constitué des agents colorants, des composés anti-agglomérants, des agents émulsifiants, des fibres de renfort, telles que les fibres de cellulose, les fibres de verre, les fibres métalliques, des dopes d'adhésivité, des additifs pour l'abaissement des températures de fabrication, de mise en oeuvre et/ou de compactage de l'enrobé et leur mélange.

Selon des modes de réalisation, l'enrobé comprend :
- de 8 à 45 % en poids, de préférence de 10 à 30 % en poids, de coke de pétrole,
- de 10 à 65 % en poids , de préférence de 15 à 50 % en poids, de granulats grossiers ayant une taille de particule de 6,3 mm ou supérieure,
- de 10 à 65 % en poids, de préférence de 12 à 40 % en poids, de granulats moyens ayant une taille de particule supérieure à 2 mm et inférieure à 6,3 mm,
- de 5 à 65 % en poids, de préférence de 10 à 50 % en poids, de granulats fins ayant une taille de particule de 63 µm à 2 mm,
- de 0 à 10 % en poids, de préférence de 0 à 5 % en poids, de fines ayant une taille de particule inférieure à 63 µm ;
- de 2 à 20 % en poids, de préférence de 2 à 10 % en poids, de liant hydrocarboné, et
- de 0 à 20 % en poids d'additifs.

Selon des modes de réalisation, l'enrobé comprend :
- de 8 à 40 % en poids, de préférence de 10 à 30 % en poids, de coke de pétrole,
- de 5 à 55 % en poids, de préférence de 10 à 40 % en poids, de granulats grossiers ayant une taille de particule de 6,3 mm ou supérieure,
- de 5 à 55 % en poids, de préférence de 10 à 40 % en poids, de granulats moyens ayant une taille de particule supérieure à 2 mm et inférieure à 6,3 mm,
- de 5 à 50 % en poids, de préférence de 10 à 40 % en poids, de granulats fins ayant une taille de particule de 63 µm à 2 mm,
- de 5 à 40 % en poids, de préférence de 8 à 35 % en poids, de fines ayant une taille de particule inférieure à 63 µm ;
- de 2 à 20 % en poids, de préférence de 5 à 15 % en poids de liant hydrocarboné, et
- de 0 à 20 % en poids d'additifs.

L'invention concerne également un procédé de préparation d'un enrobé tel que décrit ci-dessus, comprenant le mélange, à une température allant de 100 à 220°C, du coke de pétrole, des granulats et du liant hydrocarbonés.

Selon des modes de réalisation, la température du mélange est apportée par le chauffage des granulats et/ou du coke de pétrole, à une température de 100 à 220°C préalablement à leur mélange avec le liant hydrocarboné.

L'invention concerne également l'utilisation d'un enrobé tel que décrit ci-dessus, dans l'industrie routière, pour la réalisation de couches de base, de couches de liaison et/ou de couches d'assise pour chaussées ou pour le revêtement de sols.

La présente invention permet de répondre au besoin exprimé ci-dessus. Elle fournit plus particulièrement un enrobé possédant de bonnes propriétés d'isolation thermique et d'isolation acoustique. Une bonne isolation thermique pour un enrobé utilisé pour la construction de chaussées ou le revêtement de sols est particulièrement avantageuse durant les périodes de fortes chaleurs. En effet, un tel enrobé présentant une bonne isolation thermique absorbe moins de chaleur et restitue donc moins de chaleur en retour.

De plus, l'enrobé selon l'invention est économique et recyclable, et peut constituer un puits de carbone important en absorbant de manière durable une grande quantité de carbone.

Cela est accompli grâce à l'utilisation, dans l'enrobé, de coke de pétrole en une quantité appropriée.

### Brève description des figures

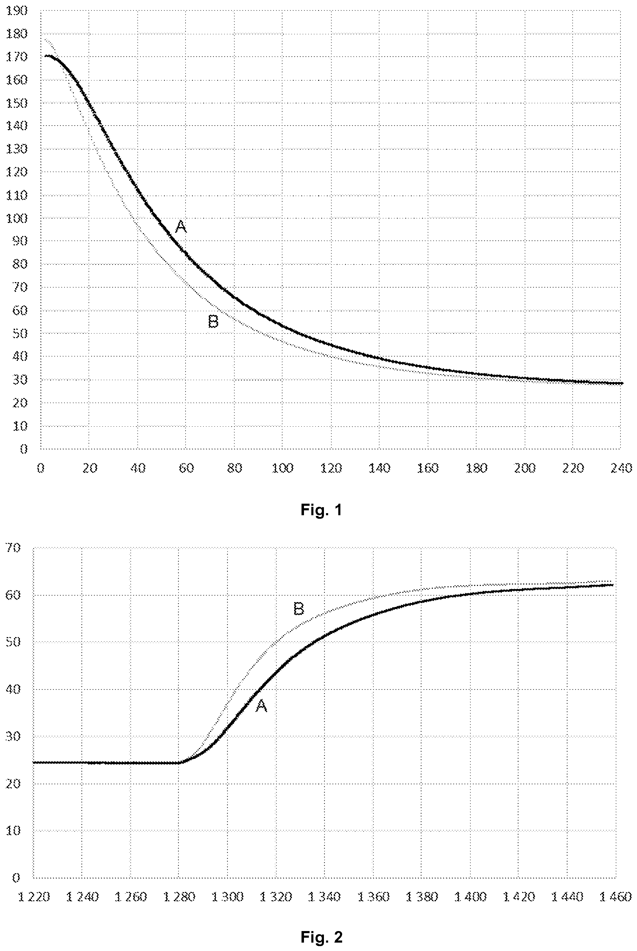

La figure 1 représente la cinétique de refroidissement des compositions telles que décrites dans l'exemple. La température (en °C) figure en ordonnée et le temps (en min) figure en abscisse. La courbe A (noire) représente la cinétique de refroidissement de la composition 1 (comprenant du coke de pétrole) et la courbe B (grise) représente la cinétique de refroidissement de la composition de référence.
La figure 2 représente la cinétique de réchauffage des compositions telles que décrites dans l'exemple. La température (en °C) figure en ordonnée et le temps (en min) figure en abscisse. La courbe A (noire) représente la cinétique de réchauffage de la composition 1 (comprenant du coke de pétrole) et la courbe B (grise) représente la cinétique de réchauffage de la composition de référence.

### Description détaillée

L'invention est maintenant décrite plus en détail et de façon non limitative dans la description qui suit.

Sauf indication contraire, tous les pourcentages concernant des quantités sont des pourcentages massiques.

Dans la présente demande, l'expression « *un liant hydrocarboné* » doit être comprise comme signifiant « *un ou plusieurs liants hydrocarbonés* ». Il en est de même de tous les autres composants.

### Enrobé

Selon un premier aspect, l'invention concerne un enrobé. Par « *enrobé* », on entend tout mélange d'une composition de liant hydrocarboné avec des granulats. Les enrobés sont utilisés entre autres comme matériaux pour la construction et l'entretien des corps de chaussée et de leur revêtement, ainsi que pour la réalisation de tous travaux de voiries. Cette désignation englobe notamment les enrobés bitumineux comprenant des vides et les asphaltes coulés dans lesquels les vides sont minimisés. Plus particulièrement, on peut citer, en tant qu'enrobé, par exemple, les enduits superficiels, les enrobés à chaud, les enrobés à froid, les enrobés coulés à froid, les graves émulsions, les couches de bases, de liaison, d'accrochage et de roulement, les couches anti-orniérantes, les enrobés drainants, ou les asphaltes.

### Coke de pétrole

L'enrobé selon l'invention comprend au moins 8 % en poids de coke de pétrole, par rapport au poids total de l'enrobé.

Le coke de pétrole est un solide carboné issu du raffinage du pétrole et produit par un procédé de cokéfaction à partir des coupes très lourdes de pétrole. Il peut par exemple être obtenu par un procédé de cokéfaction en lit fluidisé (« *fluid coking* ») ou de cokéfaction discontinue (« *de*/*ayed coking* »)*.*

Le coke de pétrole constitue le produit ultime du raffinage du pétrole, c'est-à-dire celui qui a le ratio atomique carbone/hydrogène le plus élevé, typiquement supérieur à 25, et par conséquent une viscosité non mesurable puisque le coke de pétrole se présente sous forme solide.

Le coke de pétrole sortant directement des unités de cokéfaction est appelé « *coke vert* ». Ce coke vert peut subir un procédé de calcination, par exemple dans un four rotatif, permettant d'éliminer les hydrocarbures volatiles résiduels du coke : le coke est alors appelé « *coke calciné* »*.*

Dans le cadre de la présente invention, le coke de pétrole peut être du coke de pétrole vert ou du coke de pétrole calciné. Le coke de pétrole est de préférence du coke de pétrole vert, celui-ci présentant l'avantage d'être plus économique.

De préférence, le coke de pétrole présente une taille de particule maximale inférieure ou égale à 20 mm, plus préférentiellement inférieure ou égale à 5 mm, encore plus préférentiellement inférieure ou égale à 3 mm. Dans certains modes de réalisation, le coke de pétrole présente une taille de particule inférieure à 63 µm. La taille de particule du coke de pétrole peut être mesurée par tamisage, par exemple selon la norme NF EN 933-1.

L'enrobé comprend de préférence de 8 à 45 % en poids, plus préférentiellement de 10 à 30 % en poids, de coke de pétrole par rapport au poids total de l'enrobé. Dans des modes de réalisation, l'enrobé peut comprendre de 8 à 10 % en poids, ou de 10 à 15 % en poids, ou de 15 à 20 % en poids, ou de 20 à 25 % en poids, ou de 25 à 30 % en poids, ou de 30 à 35 % en poids, ou de 35 à 40 % en poids, ou de 40 à 45 % en poids, de coke de pétrole par rapport au poids total de l'enrobé.

### Granulats

L'enrobé selon l'invention comprend au moins 50 % en poids de granulats.

Par « *granulat* », on entend tout fragment solide dont la dimension maximale est inférieure à 200 mm (telle que mesurée par tamisage, selon la norme NF EN 933-1, par exemple). Dans le cadre de la présente invention, ce terme exclut les particules de coke de pétrole.

Les granulats selon l'invention sont des granulats minéraux et/ou synthétiques. Ces granulats sont de préférence issus du concassage de roches massives ou de roches alluvionnaires. Les granulats désignent donc un matériau granulaire utilisé dans la construction et dans l'industrie routière. Un granulat peut être naturel, artificiel ou recyclé. Le terme « *granulat naturel* » désigne un granulat n'ayant subi aucune déformation autre que mécanique. Le terme « *granulat artificiel* » désigne un granulat d'origine minérale résultant d'un procédé industriel comprenant des transformations thermiques ou autres. Le terme « *granulat recyclé* » désigne un granulat précédemment utilisé dans la construction ou autre.

Avantageusement, l'enrobé comprend, par rapport au poids total de l'enrobé, de 50 à 90 % en poids de granulats et encore plus préférentiellement de 60 à 80 % de granulats, par exemple de 50 à 55 % en poids, ou de 55 à 60 % en poids, ou de 60 à 65 % en poids, ou de 65 à 70 % en poids, ou de 70 à 75 % en poids, ou de 75 à 80 % en poids, ou de 80 à 85 % en poids, ou de 85 à 90 % en poids.

Les granulats sont avantageusement choisis dans le groupe constitué :
- des granulats grossiers ayant une taille de particule de 6,3 mm ou supérieure, de préférence inférieure à 5 cm ;
- des granulats moyens ayant une taille de particule supérieure à 2 mm et inférieure à 6,3 mm ;
- des granulats fins ayant une taille de particule de 63 µm à 2 mm ;
- des fines (ou fillers) ayant une taille de particule inférieure à 63 µm ; et
- des combinaisons de ceux-ci.

La taille (ou diamètre) de particule des granulats peut être mesurée par tamisage, par exemple selon la norme NF EN 933-1, ou par granulométrie laser.

L'enrobé peut comprendre de 0 à 90 % en poids de granulats grossiers, de préférence de 5 à 65 % en poids, par rapport au poids total l'enrobé. Dans des modes de réalisation, l'enrobé peut comprendre de 0 à 10 % en poids, ou de 10 à 20 % en poids, ou de 20 à 30 % en poids, ou de 30 à 40 % en poids, ou de 40 à 50 % en poids, ou de 50 à 60 % en poids, ou de 60 à 70 % en poids, ou de 70 % à 80% en poids, ou de 80 % à 90% en poids, de granulats grossiers, par rapport au poids total de l'enrobé.

L'enrobé peut également comprendre de 0 à 90 % en poids de granulats moyens, de préférence de 5 à 65 %, par rapport au poids total de l'enrobé. Dans des modes de réalisation, l'enrobé peut comprendre de 0 à 10 % en poids, ou de 10 à 20 % en poids, ou de 20 à 30 % en poids, ou de 30 à 40 % en poids, ou de 40 à 50 % en poids, ou de 50 à 60 % en poids, ou de 60 à 70 % en poids, ou de 70 à 80 % en poids, ou de 80 à 90 % en poids, de granulats moyens, par rapport au poids total de l'enrobé.

L'enrobé peut également comprendre de 0 à 70 % en poids de granulats fins, de préférence de 5 à 65 %, par rapport au poids total de l'enrobé. Dans des modes de réalisation, l'enrobé peut comprendre de 0 à 5 % en poids, ou de 5 à 10 % en poids, ou de 10 à 15 % en poids, ou de 15 à 20 % en poids, ou de 20 à 25 % en poids, ou de 25 à 30 % en poids, ou de 30 à 35 % en poids, ou de 35 à 40 % en poids, ou de 40 à 45 % en poids, ou de 45 à 50 % en poids, ou de 50 à 55 % en poids, ou de 55 à 60 % en poids, ou de 60 à 65 % en poids, ou de 65 à 70 % en poids, de granulats fins par rapport au poids total de l'enrobé.

L'enrobé peut également comprendre de 0 à 40 % en poids, de préférence de 0 à 20 % en poids, de fines, par rapport au poids total de l'enrobé. Dans des modes de réalisation, l'enrobé peut comprendre de 0 à 2 % en poids, ou de 2 à 4 % en poids, ou de 4 à 6 % en poids, ou de 6 à 8 % en poids, ou de 8 à 10 % en poids, ou de 10 à 15 % en poids, ou de 15 à 20 % en poids, ou de 20 à 25 % en poids, ou de 25 à 30 % en poids, ou de 35 à 40 % en poids, de fines par rapport au poids total de l'enrobé.

Les granulats appartenant aux catégories décrites ci-dessus (granulats grossiers, granulats moyens, granulats fins et fines) peuvent être, d'une catégorie par rapport à l'autre, de même nature ou de nature différente. De même, les granulats, dans chacune des catégories décrites ci-dessus, peuvent être tous de même nature ou de nature différente.

Les granulats, quelle que soit la catégorie à laquelle ils appartiennent, peuvent comprendre, ou être composés, par exemple, de calcaire, de silice, et/ou de roche magmatique ou plutonique.

Les granulats peuvent être, en tout ou en partie, des fragments d'enrobé bitumineux issu de l'industrie routière et/ou des fragments de matériau de construction concassé issu de l'industrie de la construction, par exemple des fraisats issus du recyclage d'enrobés, graves et asphaltes routiers, à l'exception de ceux contenant des fibres d'amiante. De tels fragments peuvent comprendre une certaine proportion de liant hydrocarboné. Dans ce cas, le liant hydrocarboné en question est comptabilisé avec le liant hydrocarboné apporté séparément, pour les besoins des calculs de proportions des différents composés de l'enrobé. Les fragments d'enrobé bitumineux issu de l'industrie routière et/ou les fragments de matériau de construction concassé issu de l'industrie de la construction peuvent par exemple être présents en une proportion de 0 à 10 % en poids, ou de 10 à 20 % en poids, ou de 20 à 30 % en poids, ou de 30 à 40 % en poids, ou de 40 à 50 % en poids, ou de 50 à 60 % en poids, ou de 60 à 70 % en poids, ou de 70 % à 80 % en poids, ou de 80 % à 90 % en poids, par rapport au poids total de l'enrobé. Des gammes préférées sont de 5 à 70 %, ou de 15 à 50 %, en poids, par rapport au poids total de l'enrobé. Les granulats peuvent aussi être, en tout ou en partie, des fragments de déchets plastiques, permettant ainsi de recycler ces déchets.

Les granulats fins peuvent être notamment du sable.

### Liant hydrocarboné

L'enrobé comprend un liant hydrocarboné. Par « *liant* », on entend un produit permettant l'agglomération de tout ou partie des éléments solides constituant l'enrobé. Par « *liant hydrocarboné* », on entend tout liant comprenant un ou des hydrocarbures. Dans le cadre de la présente invention, ce terme exclut le coke de pétrole.

De préférence, l'enrobé comprend de 2 à 20 % en poids de liant, de préférence de 5 à 15 % en poids, par rapport au poids total de l'enrobé. Dans des modes de réalisation, l'enrobé peut comprendre de 0,1 à 2 % en poids, ou de 2 à 4 % en poids, ou de 4 à 6 % en poids, ou de 6 à 8 % en poids, ou de 8 à 10 % en poids, ou de 10 à 12 % en poids, ou de 12 à 15 %, ou de 15 à 20 % en poids, en poids, de liant, par rapport au poids total de l'enrobé.

Les quantités de liant indiquées ci-dessus se réfèrent à la quantité du liant en tant que tel et ne tiennent pas compte des éventuels additifs incorporés au liant, par exemple pour faciliter son ajout avec les autres constituants de l'enrobé, par exemple l'eau lorsque le liant hydrocarboné est introduit sous la forme d'une émulsion dans le mélange pour la préparation de l'enrobé.

Le liant hydrocarboné (en tant que tel) a préférentiellement une viscosité cinématique à 50°C supérieure ou égale à 50 mm²/s, encore plus préférentiellement supérieure ou égale à 100 mm²/s, par exemple de 50 à 100 mm²/s, ou de 100 à 500 mm²/s, ou de 500 à 1000 mm²/s, ou de 1000 à 1500 mm²/s, ou de 1500 à 2000 mm²/s, ou de 2000 à 2500 mm²/s, ou de 2500 à 3000 mm²/s, ou de 3000 à 3500 mm²/s, ou de 3500 à 4000 mm²/s. La viscosité cinématique peut être mesurée à 50°C d'après la norme NF EN ISO 3104.

Le liant hydrocarboné est avantageusement choisi dans le groupe constitué des bitumes, des brais, des liants clairs ou des mélanges de ceux-ci.

Le bitume selon l'invention a de préférence une pénétrabilité inférieure à 800 dixièmes de mm à 25°C, mesurée par la norme NF EN 1426. Dans des modes de réalisation, le bitume a une pénétrabilité à 25°C mesurée par la norme NF EN 1426 allant de 10 à 30 dixièmes de mm, ou de 30 à 50 dixièmes de mm, ou de 50 à 100 dixièmes de mm, ou de 100 à 200 dixièmes de mm, ou de 200 à 300 dixièmes de mm, ou de 300 à 400 dixièmes de mm, ou de 400 à 500 dixièmes de mm, ou de 500 à 600 dixièmes de mm, ou de 600 à 700 dixièmes de mm, ou de 700 à 800 dixièmes de mm.

Les bitumes selon l'invention peuvent être du bitume pur, du bitume modifié ou du bitume spécial, seuls ou en mélange. Ils comprennent les bitumes d'origine naturelle, ceux contenus dans des gisements de bitume naturel, d'asphalte naturel ou les sables bitumineux. Les bitumes selon l'invention comprennent aussi les bitumes provenant du raffinage du pétrole brut. Les bitumes proviennent de la distillation atmosphérique et/ou sous vide du pétrole. Ces bitumes pouvant être éventuellement soufflés, viscoréduits et/ou issus du procédé de désasphaltage. Les différents bitumes obtenus par les procédés de raffinage peuvent être combinés entre eux. Le bitume peut aussi être un bitume de recyclage. Les bitumes peuvent être des bitumes de grade dur ou de grade mou.

Le brai provient aussi de la distillation atmosphérique et/ou sous vide du pétrole. Il est essentiellement utilisé comme combustible. Le brai présente une viscosité allant jusqu'à 4000 mm²/s pour la viscosité cinématique à 50°C (mesurée par exemple selon la norme NF EN ISO 3104). Le brai est aussi connu sous le terme *« combustible haute viscosité* ». Le brai selon l'invention peut être un brai soufflé, également appelé brai oxydé. Le brai oxydé peut être obtenu par oxydation d'un mélange comprenant du brai et un diluant, tel qu'une essence légère, également appelé « *fluxant* » soumis à une opération d'oxydation dans une tour de soufflage en présence d'un catalyseur, à une température fixée et à une pression donnée.

Le brai présente de préférence une pénétrabilité à 25°C de 0 à 20 dixièmes de mm, de préférence de 5 à 20 dixièmes de mm, la pénétrabilité étant mesurée selon la norme EN 1426. Avantageusement, le brai présente un point de ramollissement compris entre 115°C et 175°C, par exemple, un point de ramollissement compris entre 115°C et 125°C, entre 135 et 145°C ou encore entre 165 et 175°C.

Le liant clair selon l'invention comprend de préférence :
- un agent plastifiant, par exemple une huile naturelle ou synthétique, dépourvue d'asphaltènes, de préférence en une quantité de 40 à 80 % en poids par rapport au poids total du liant clair,
- un agent structurant, par exemple une résine hydrocarbonée ou végétale, de préférence en une quantité de 20 à 50 % en poids, par rapport au poids total du liant clair,
- un polymère, avantageusement un copolymère, par exemple un copolymère de styrène et butadiène, de préférence en une quantité de 1 à 7 % en poids par rapport au poids total du liant clair, et
- optionnellement, des agents dopants, ou dopes, ou dopes d'adhésivité, de préférence en une quantité de 0,05 à 0,5 % en poids par rapport au poids total du liant clair.

Avantageusement, le liant clair présente un indice de couleur inférieur ou égal à 4, de préférence inférieur ou égal à 3, tel que déterminé selon l'échelle ASTM DH4. Il a de préférence une température de ramollissement Température Bille-Anneau déterminée selon la norme NF EN 1427 comprise entre 55°C et 90°C. Le liant clair a de préférence une pénétrabilité à 25°C, mesurée selon la norme NF EN 1426, comprise entre 10 et 220 dixièmes de mm, plus préférentiellement entre 30 et 100 dixièmes de mm, encore plus préférentiellement entre 40 et 80 dixièmes de mm. La pénétrabilité du liant clair peut être modulée notamment en choisissant judicieusement le rapport en poids [agent structurant/agent plastifiant] dans la composition du liant clair. En effet, une augmentation de ce rapport permet de diminuer la pénétrabilité à 25°C.

Le liant clair peut être préparé par exemple selon un procédé comprenant les étapes de :
(i) mélange de l'agent plastifiant, par exemple une huile paraffinique issue des coupes de désasphaltage de distillation sous pression réduite (résidu sous vide, RSV) de pétrole brut ( « *huile DAO* ») ou une huile aromatique, et chauffage à une température comprise entre 140 et 200°C, par exemple de 10 minutes à 30 minutes,
(ii) ajout de l'agent structurant, par exemple une résine hydrocarbonée, mélange et chauffage à une température comprise entre 140 et 200°C, par exemple de 30 minutes à 2 heures,
(iii) ajout du ou des polymères, par exemple un copolymère styrène-butadiène-styrène (SBS), mélange et chauffage à une température comprise entre 140 et 200°C, par exemple, de 90 minutes à 3 heures, de préférence de 90 minutes à 2 heures 30,
(iv) ajout éventuel d'un dope d'adhésivité, mélange et chauffage à une température comprise entre 140 et 200°C, par exemple, de 5 minutes à 20 minutes.

L'ordre des étapes (i) à (iv) peut être modifié.

### Additifs

L'enrobé selon l'invention peut comprendre des additifs. De préférence, ces additifs sont choisis dans le groupe constitué des agents colorants, des composés anti-agglomérants, des agents émulsifiants, des fibres de renfort, des dopes d'adhésivité, des additifs pour l'abaissement des températures de fabrication, de mise en oeuvre et/ou de compactage de l'enrobé et leur mélange.

De manière préférée, ces additifs sont présents dans l'enrobé en une quantité de 0 à 20 % en poids, plus préférentiellement de 0 à 10 % en poids, par rapport au poids total de l'enrobé. Dans certains modes de réalisation, l'enrobé comprend de 0 à 5 % en poids, ou de 5 à 10 % en poids, ou de 10 à 15 % en poids, ou de 15 à 20 % en poids, d'additifs, par rapport au poids total de l'enrobé.

Les agents colorants sont destinés à la coloration des enrobés, en particulier des enrobés dépourvus de composés bitumineux ou de brai (comprenant par exemple un liant clair en tant que liant hydrocarboné). Il peut s'agir par exemple de pigments minéraux ou de colorants organiques. Les pigments sont sélectionnés suivant la teinte, la couleur souhaitée pour l'enrobé. On utilisera par exemple des oxydes métalliques tels que des oxydes de fer, des oxydes de chrome, des oxydes de cobalt, des oxydes de titane pour obtenir les couleurs rouge, jaune, gris, vert, bleu ou blanc.

Les composés anti-agglomérants peuvent être d'origine minérale ou organique. On peut citer le talc ; le ciment ; le carbone ; les résidus du bois tels que la lignine, la lignosulfonate, les poudres d'aiguilles de conifères, les poudres de cônes de conifères, notamment de pin ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les oxydes de silicium ; la poudre de matière plastique ; la chaux ; le plâtre ; la poudre de caoutchouc ; la poudre de polymères tels que les copolymères styrène-butadiène (SB), les copolymères styrène-butadiène-styrène (SBS) ; et leurs mélanges.

Les fibres de renfort peuvent être de tout type. On peut citer par exemple les fibres de cellulose, les fibres de verre, les fibres métalliques et leur mélange.

Pour améliorer l'affinité réciproque entre le liant hydrocarboné et les granulats et afin d'en assurer la pérennité, l'enrobé selon l'invention peut également comprendre en tant qu'additif des dopes d'adhésivité. Il s'agit par exemple de composés tensioactifs azotés dérivés des acides gras (amines, polyamines, alkyl-polyamine, *etc*.). Lorsqu'ils sont ajoutés à l'enrobé, les dopes d'adhésivité représentent, de préférence, de 0,05 % à 1 % en poids par rapport au poids du liant hydrocarboné. Par exemple, on peut ajouter de 0,05 % à 0,5 % en poids, de préférence de 0,1 % à 0,3 % en poids, de dopes d'adhésivité.

Les additifs pour l'abaissement des températures de fabrication, de mise en oeuvre et/ou de compactage de l'enrobé bitumineux peuvent être, par exemple, les dérivés de l'huile de tall (Tall Oil), pris seuls ou en mélange avec un monoester d'un mélange d'acides gras, tels que ceux décrits dans le document WO 2010/134024.

On peut également citer, comme additifs appropriés pour l'enrobé selon l'invention, les additifs décrits dans le document WO 2012/049579 et dans le documents WO 2014/095995.

Lorsque les additifs précités répondent à la définition du terme « *granulat* » donnée ci-dessus, et en particulier qu'ils sont compris dans l'une des catégories de granulats définies ci-dessus (granulats grossiers, moyens, fins, ou fines), ils sont comptabilisés en tant que granulats de cette catégorie, pour les besoins des calculs de proportions des différents composés de l'enrobé, et non en tant qu'additifs.

### Composition d'enrobé

Avantageusement, dans l'enrobé selon l'invention, le rapport pondéral du coke de pétrole sur le liant hydrocarboné est supérieur ou égal à 1,8, de préférence encore supérieur ou égal à 2, de préférence encore supérieur ou égal à 3. Par exemple, le rapport pondéral du coke de pétrole sur le liant hydrocarboné peut être supérieur ou égal à 1,9, ou supérieur ou égal à 2,2, ou supérieur ou égal à 2,5, ou supérieur ou égal à 2,8, ou supérieur ou égal à 3,5, ou supérieur ou égal à 4, ou supérieur ou égal à 4,5, ou supérieur ou égal à 5.

Selon des modes de réalisation, l'enrobé peut comprendre :
- de 8 à 45 % en poids, de préférence de 10 à 30 % en poids, de coke de pétrole,
- de 10 à 65 % en poids, de préférence de 15 à 50 % en poids, de granulats grossiers ayant une taille de particule de 6,3 mm ou supérieure,
- de 10 à 65 % en poids, de préférence de 12 à 40 % en poids, de granulats moyens ayant une taille de particule supérieure à 2 mm et inférieure à 6,3 mm,
- de 5 à 65 % en poids, de préférence de 10 à 50 % en poids, de granulats fins ayant une taille de particule de 63 µm à 2 mm,
- de 0 à 10 % en poids, de préférence de 0 à 5 % en poids, de fines, ayant une taille de particule inférieure à 63 µm ;
- de 2 à 20 % en poids, de préférence de 2 à 10 % en poids, de liant hydrocarboné, et
- de 0 à 20 % en poids d'additifs.

Selon des modes de réalisation, l'enrobé peut comprendre :
- de 8 à 40 % en poids, de préférence de 10 à 30 % en poids, de coke de pétrole,
- de 5 à 55 % en poids, de préférence de 10 à 40 % en poids, de granulats grossiers ayant une taille de particule de 6,3 mm ou supérieure,
- de 5 à 55 % en poids, de préférence de 10 à 40 % en poids, de granulats moyens ayant une taille de particule supérieure à 2 mm et inférieure à 6,3 mm,
- de 5 à 50 % en poids, de préférence de 10 à 40 % en poids, de granulats fins ayant une taille de particule de 63 µm à 2 mm,
- de 5 à 40 % en poids, de préférence de 8 à 35 % en poids, de fines ayant une taille de particule inférieure à 63 µm ;
- de 2 à 20 % en poids, de préférence de 5 à 15 % en poids de liant hydrocarboné, et
- de 0 à 20 % en poids d'additifs.

Dans certains modes de réalisation, l'enrobé consiste essentiellement, ou consiste, en les composés décrits ci-dessus, dans l'une quelconque des configurations de composition décrites ci-dessus.

L'enrobé selon l'invention peut être recyclé, une ou plusieurs fois, par exemple en tant que granulats. Ainsi, l'enrobé peut être broyé et/ou concassé, de sorte à obtenir des fragments de taille plus réduite. Ces fragments peuvent ensuite être criblés pour être sélectionnés en fonction de leur taille. Ils peuvent par exemple être réutilisés en tant que granulats grossiers, que granulats moyens, que granulats fins et/ou que fines.

### Préparation de l'enrobé

Selon un autre aspect, l'invention concerne un procédé de préparation d'un enrobé tel que décrit ci-dessus. Ce procédé comprend le mélange des composants de l'enrobé, et notamment du coke de pétrole, des granulats et du liant hydrocarboné. De préférence, le mélange est réalisé à une température allant de 100 à 220°C, plus préférentiellement de 120 à 200°C.

Le mélange des composants peut par exemple avoir lieu dans un malaxeur ou dans un tambour malaxeur. Il peut durer de quelques secondes à plusieurs heures.

Le mélange des composants de l'enrobé, et notamment du coke de pétrole, des granulats et du liant hydrocarboné, peut être effectué en une ou plusieurs étapes. De préférence, le coke de pétrole est mélangé avec les granulats, c'est-à-dire qu'il est par exemple mélangé avec les granulats grossiers, avec les granulats moyens, avec les granulats fins et/ou avec les fines, et/ou avec le liant hydrocarboné, et/ou avec les additifs (par exemple agents colorants, composés anti-agglomérants, fibres de renfort, agents émulsifiants et/ou autres additifs). Les composants ci-dessus peuvent être introduits dans le mélange dans un ordre quelconque ou tous en même temps, ou en partie en même temps. Certains de ces composants peuvent être prémélangés avant d'être mélangés avec les autres composants.

Les composés qui sont mélangés pour préparer l'enrobé sont tels que décrits ci-dessus, en ce qui concerne leur nature, leur granulométrie et leur quantité.

Le coke de pétrole est de préférence broyé préalablement à son mélange avec les autres composants.

Le procédé peut comprendre une étape, préalable au mélange, de chauffage des granulats et/ou du coke de pétrole. Ces derniers peuvent être chauffés à une température de 100 à 220°C, de préférence de 120 à 200°C, par exemple dans une étuve. Les granulats et/ou le coke de pétrole peuvent être chauffés pendant une durée de plusieurs heures, par exemple de 3 à 24 h, de préférence de 5 à 20 h.

Le liant hydrocarboné peut être incorporé dans le mélange sous la forme d'une émulsion de liant hydrocarboné dans l'eau. Les émulsions de liant hydrocarboné sont bien connues de l'homme du métier. De préférence, l'émulsion comprend de 50 à 80 %, de préférence de 60 à 80 %, en poids de liant hydrocarboné ; de 20 à 50 %, de préférence de 20 à 40 %, en poids d'eau ; et éventuellement un ou plusieurs agents émulsifiants, de préférence en une quantité inférieure à 1 % en poids, par exemple de 0,01 à 1 % en poids. L'émulsion a de préférence une viscosité allant de 20 à 200 s (correspondant au temps d'écoulement avec un forage de 4 mm, à 40°C, mesuré selon la norme NF EN 12846-1).

L'émulsion peut être préparée juste avant le mélange avec les autres composants ou plus en amont du mélange. Le premier cas est avantageux car il n'est alors pas nécessaire d'obtenir une émulsion possédant une grande stabilité, ce qui rend possible la diminution de la quantité d'agents émulsifiants utilisés, voire leur suppression complète.

De préférence, lorsque le liant hydrocarboné est incorporé au mélange sous forme d'émulsion, l'émulsion est introduite à température ambiante, (c'est-à-dire à une température de 15 à 30°C), ou, alternativement, l'émulsion est préalablement chauffée à une température pouvant atteindre 90°C. L'introduction du liant hydrocarboné sous la forme d'une émulsion peut permettre de faciliter la liaison du liant notamment au coke de pétrole. De plus, l'utilisation d'une émulsion de liant hydrocarboné peut permettre d'éviter le chauffage du liant avant son mélange avec les autres composants.

Lorsqu'un liant hydrocarboné est introduit dans le mélange sous la forme d'une émulsion, il est de préférence incorporé après les autres composants, à la fin de l'étape de mélange.

Le liant hydrocarboné peut également être incorporé au mélange sous forme pure et liquide. Dans ce cas, il est avantageusement préalablement chauffé à une température allant de 50 à 100 °C, ou, alternativement, à une température allant de 100 à 220°C, de préférence de 120 à 200°C.

Alternativement encore, le liant hydrocarboné peut être introduit sous forme solide et divisée, comme par exemple sous forme de granules ou de pains de liant. On entend par « *pain de liant* », un bloc de liant ayant une masse comprise entre 0,5 g et 1000 kg, de préférence, entre 1 kg et 200 kg, plus préférentiellement entre 1 kg et 50 kg, encore plus préférentiellement entre 5 kg et 25 kg, encore plus préférentiellement entre 10 kg et 30 kg, ledit bloc étant avantageusement parallélépipédique, de préférence étant un pavé. Les « *granules de liant* » peuvent être définies comme un liant solide à température ambiante conditionné sous une forme divisée, sous forme d'unités de petite taille nommées granules ou particules.

De préférence, les granules ou pains de liant sont introduits dans le mélange à froid, c'est-à-dire par exemple à température ambiante. Selon cette variante, le procédé présente l'avantage de pouvoir être mis en oeuvre sans étape préalable de chauffage des granules ou des pains de liant solide. En effet, par exemple, lorsque les granulats et/ou le coke de pétrole ont été chauffées préalablement à leur mélange avec le liant hydrocarboné, ce dernier peut être introduit sans avoir été fondu préalablement au mélange car au contact des granulats et/ou du coke de pétrole chauds, le liant solide à température ambiante fond.

Avantageusement, le procédé ne requiert pas d'étape de chauffage du liant hydrocarboné avant son mélange avec les autres composants de l'enrobé. De préférence encore, la température de l'étape de mélange est apportée par le chauffage des granulats et/ou du coke de pétrole tel que décrit ci-dessus, préalablement à leur mélange avec le liant hydrocarboné.

### Applications

Selon un autre aspect, l'invention concerne l'utilisation d'un enrobé tel que décrit ci-dessus, dans l'industrie routière, pour la réalisation de couches de base, de couches de liaison et/ou de couches d'assise pour chaussées.

L'enrobé tel que décrit ci-dessus peut également être utilisé pour le revêtement de sols, notamment de voies de circulation. Comme sols pouvant être revêtus par l'enrobé selon l'invention, on peut mentionner les chaussées, les sols de parkings ; les voies de circulation pour piétons, telles que les trottoirs ou les terrasses ; les aménagements urbains, tels que les pistes de skateboards ; les sols d'équipements sportifs ou de sites industriels ; les sols de chambres froides.

L'enrobé tel que décrit ci-dessus peut également être utilisé dans diverses applications industrielles notamment pour préparer un revêtement d'étanchéité, une membrane ou une couche d'imprégnation. L'enrobé tel que décrit ci-dessus peut être particulièrement adapté à la fabrication de membranes d'étanchéité, de membranes anti-bruit, de membranes d'isolation, des revêtements de surface, des dalles de moquette, des couches d'imprégnation.

### Exemples

Les exemples suivants illustrent l'invention sans la limiter.

Deux compositions sont préparées par mélange des composants suivants, dans les quantités massiques indiquées :

| **Composition** | **Référence** | **Composition n°1** |
|---|---|---|
| Sable roulé de granulométrie 0/4 (Eiffage) | 19,3 % | 19,3 % |
| Granulats de granulométrie 2/4 (La Noubleau) | 22,9 % | 22,9 % |
| Granulats de granulométrie 4/6 (La Noubleau) | 22,9 % | 22,9 % |
| Filler calcaire (Piketty) | 26,6 % | - |
| Coke de pétrole micronisé | - | 26,6 % |
| Bitume Azalt 35/50 (FZN) | 8,30 % | 8,30 % |

Dans la composition 1 ci-dessus, le coke de pétrole est sous forme de fines (ou fillers).

Pour préparer les compositions, les matériaux sont chauffés à 190°C puis mélangés.

Chacune des 2 compositions est placée dans une boite métallique (identique pour chaque composition). Une sonde de mesure de la température est placée au milieu de chaque boite.

Les boites contenant les compositions sont ensuite laissées à refroidir puis placées dans une étuve à 60°C pour être réchauffées. Les cinétiques de refroidissement et de réchauffage sont mesurées à l'aide de la sonde. Les résultats sont présentés en **figures 1** et **2****.**

Lorsque l'on observe la cinétique de refroidissement **(****figure 1****),** on constate que la composition 1 (comprenant le coke de pétrole) atteint la température de 30°C au bout de 208 min alors que la composition de référence (dans laquelle le coke de pétrole a été substitué par un filler de calcaire) atteint la température de 30°C au bout de 188,5 min. La composition 1 met donc environ 20 minutes de plus pour refroidir jusqu'à la température de 30°C que la composition de référence. En outre, en observant la cinétique de réchauffage **(****figure 2****),** on constate que la composition de référence atteint la température de 60°C à la minute 1366,5 alors que la composition n°1 atteint la température de 60°C à la minute 1396,5. La composition 1 met donc 30 minutes de plus pour atteindre la température de 60°C par rapport à la composition de référence.

La composition n°1 présente donc de meilleures propriétés d'isolation thermique que la composition de référence.

## Revendications

1. Enrobé comprenant au moins 50 % en poids de granulats, au moins 8 % en poids de coke de pétrole et au moins un liant hydrocarboné.

2. Enrobé selon la revendication 1, dans lequel le rapport pondéral du coke de pétrole sur le liant hydrocarboné est supérieur ou égal à 1,8, de préférence supérieur ou égal à 2.

3. Enrobé selon la revendication 1 ou 2, comprenant de 8 à 45 % en poids, de préférence de 10 à 30 % en poids, de coke de pétrole.

4. Enrobé selon l'une des revendications 1 à 3, dans lequel le coke de pétrole présente une taille maximale de particule inférieure ou égale à 20 mm, de préférence inférieure ou égale à 5 mm.

5. Enrobé selon l'une des revendications 1 à 3, dans lequel le coke de pétrole présente une taille maximale de particule inférieure à 63 µm.

6. Enrobé selon l'une des revendications 1 à 5, dans lequel les granulats sont choisis dans le groupe constitué des granulats grossiers ayant une taille de particule de 6,3 mm ou supérieure, des granulats moyens ayant une taille de particule supérieure à 2 mm et inférieure à 6,3 mm, des granulats fins ayant une taille de particule de 63 µm à 2 mm, des fines ayant une taille de particule inférieure à 63 µm et des combinaisons de ceux-ci ; et/ou dans lequel l'enrobé comprend de 50 à 90 % en poids, de préférence de 60 à 85 % en poids, de granulats.

7. Enrobé selon l'une des revendications 1 à 6, comprenant en tant que granulats :
- de 0 à 90 % en poids, de préférence de 5 à 65 % en poids, de granulats grossiers ayant une taille de particule de 6,3 mm ou supérieure ;
- de 0 à 90 % en poids, de préférence de 5 à 65 %, en poids de granulats moyens ayant une taille de particule supérieure à 2 mm et inférieure à 6,3 mm ;
- de 0 à 70 % en poids, de préférence de 5 à 65 %, en poids de granulats fins ayant une taille de particule de 63 µm à 2 mm ; et
- de 0 à 40 % en poids, de préférence de 0 à 20 % en poids, de fines ayant une taille de particule inférieure à 63 µm ;
par rapport au poids total de l'enrobé.

8. Enrobé selon l'une des revendications 1 à 7, comprenant de 2 à 20 % en poids, de préférence de 5 à 15 % en poids de liant hydrocarboné.

9. Enrobé selon l'une des revendications 1 à 8, dans lequel le liant hydrocarboné est choisi dans le groupe constitué des bitumes, des brais, des liants clairs et des mélanges de ceux-ci.

10. Enrobé selon l'une des revendications 1 à 9, comprenant en outre de 0 à 20 % en poids d'additifs, de préférence choisis dans le groupe constitué des agents colorants, des composés anti-agglomérants, des agents émulsifiants, des fibres de renfort, telles que les fibres de cellulose, les fibres de verre, les fibres métalliques, des dopes d'adhésivité, des additifs pour l'abaissement des températures de fabrication, de mise en oeuvre et/ou de compactage de l'enrobé et leur mélange.

11. Enrobé selon l'une des revendications 1 à 10, comprenant :
- de 8 à 45 % en poids, de préférence de 10 à 30 % en poids, de coke de pétrole,
- de 10 à 65 % en poids, de préférence de 15 à 50 % en poids, de granulats grossiers ayant une taille de particule de 6,3 mm ou supérieure,
- de 10 à 65 % en poids, de préférence de 12 à 40 % en poids, de granulats moyens ayant une taille de particule supérieure à 2 mm et inférieure à 6,3 mm,
- de 5 à 65 % en poids, de préférence de 10 à 50 % en poids, de granulats fins ayant une taille de particule de 63 µm à 2 mm,
- de 0 à 10 % en poids, de préférence de 0 à 5 % en poids, de fines ayant une taille de particule inférieure à 63 µm ;
- de 2 à 20 % en poids, de préférence de 2 à 10 % en poids, de liant hydrocarboné, et
- de 0 à 20 % en poids d'additifs.

12. Enrobé selon l'une des revendications 1 à 10, comprenant :
- de 8 à 40 % en poids, de préférence de 10 à 30 % en poids, de coke de pétrole,
- de 5 à 55 % en poids, de préférence de 10 à 40 % en poids, de granulats grossiers ayant une taille de particule de 6,3 mm ou supérieure,
- de 5 à 55 % en poids, de préférence de 10 à 40 % en poids, de granulats moyens ayant une taille de particule supérieure à 2 mm et inférieure à 6,3 mm,
- de 5 à 50 % en poids, de préférence de 10 à 40 % en poids, de granulats fins ayant une taille de particule de 63 µm à 2 mm,
- de 5 à 40 % en poids, de préférence de 8 à 35 % en poids, de fines ayant une taille de particule inférieure à 63 µm ;
- de 2 à 20 % en poids, de préférence de 5 à 15 % en poids de liant hydrocarboné, et
- de 0 à 20 % en poids d'additifs.

13. Procédé de préparation d'un enrobé selon l'une des revendications 1 à 12, comprenant le mélange, à une température allant de 100 à 220 °C, du coke de pétrole, des granulats et du liant hydrocarbonés.

14. Procédé selon la revendication 13, dans lequel la température du mélange est apportée par le chauffage des granulats et/ou du coke de pétrole, à une température de 100 à 220 °C préalablement à leur mélange avec le liant hydrocarboné.

15. Utilisation d'un enrobé selon l'une des revendications 1 à 12, dans l'industrie routière, pour la réalisation de couches de base, de couches de liaison et/ou de couches d'assise pour chaussées ou pour le revêtement de sols.

## Patentansprüche

1. Asphaltmischgut, umfassend mindestens 50 Gewichts-% Zuschlagstoffe, mindestens 8 Gewichts-% Petrolkoks und mindestens ein kohlenwasserstoffhaltiges Bindemittel.

2. Asphaltmischgut nach Anspruch 1, wobei das Gewichtsverhältnis von Petrolkoks zu kohlenwasserstoffhaltigem Bindemittel größer als oder gleich wie 1,8, vorzugsweise größer als oder gleich wie 2, ist.

3. Asphaltmischgut nach Anspruch 1 oder 2, umfassend 8 bis 45 Gewichts-%, vorzugsweise 10 bis 30 Gewichts-%, Petrolkoks.

4. Asphaltmischgut nach einem der Ansprüche 1 bis 3, wobei der Petrolkoks eine maximale Teilchengröße von weniger als oder gleich wie 20 mm, vorzugsweise weniger als oder gleich wie 5 mm, aufweist.

5. Asphaltmischgut nach einem der Ansprüche 1 bis 3, wobei der Petrolkoks eine maximale Teilchengröße von weniger als 63 µm aufweist.

6. Asphaltmischgut nach einem der Ansprüche 1 bis 5, wobei die Zuschlagstoffe ausgewählt sind aus der Gruppe, bestehend aus groben Zuschlagstoffen, die eine Partikelgröße von 6,3 mm oder größer aufweisen, mittleren Zuschlagstoffen, die eine Partikelgröße von mehr als 2 mm und weniger als 6,3 mm aufweisen, feinen Zuschlagstoffen, die eine Partikelgröße von 63 µm bis 2 mm aufweisen, Feinstoffe, die eine Partikelgröße von weniger als 63 µm aufweisen, und Kombinationen davon; und/oder wobei das Asphaltmischgut 50 bis 90 Gewichts-%, vorzugsweise 60 bis 85 Gewichts-%, an Zuschlagstoffen umfasst.

7. Asphaltmischgut nach einem der Ansprüche 1 bis 6, umfassend als Zuschlagstoffe:
- 0 bis 90 Gewichts-%, vorzugsweise 5 bis 65 Gewichts-%, grobe Zuschlagstoffe, die eine Teilchengröße von 6,3 mm oder mehr aufweisen;
- 0 bis 90 Gewichts-%, vorzugsweise 5 bis 65 Gewichts-%, mittlere Zuschlagstoffe, die eine Teilchengröße von mehr als 2 mm und weniger als 6,3 mm aufweisen;
- 0 bis 70 Gewichts-%, vorzugsweise 5 bis 65 Gewichts-%, an feinen Körnern, die eine Teilchengröße von 63 µm bis 2 mm aufweisen; und
- von 0 bis 40 Gewichts-%, vorzugsweise von 0 bis 20 Gewichts-%, Feinstoffe, die eine Teilchengröße von weniger als 63 µm aufweisen;
bezogen auf das Gesamtgewicht des Asphaltmischguts.

8. Asphaltmischgut nach einem der Ansprüche 1 bis 7, umfassend 2 bis 20 Gewichts-%, vorzugsweise 5 bis 15 Gewichts-%, kohlenwasserstoffhaltiges Bindemittel.

9. Asphaltmischgut nach einem der Ansprüche 1 bis 8, wobei das kohlenwasserstoffhaltige Bindemittel ausgewählt ist aus der Gruppe, bestehend aus Bitumen, Pech, hellen Bindemitteln und Gemischen davon.

10. Asphaltmischgut nach einem der Ansprüche 1 bis 9, ferner umfassend 0 bis 20 Gewichts-% Zusatzstoffe, vorzugsweise ausgewählt aus der Gruppe, bestehend aus Farbmitteln, Antiklumpmittelverbindungen, Emulgatoren, Verstärkungsfasern, wie beispielsweise Zellulosefasern, Glasfasern, Metallfasern, Klebrigkeitsdotierungen, Zusatzstoffen zur Senkung der Herstellungs-, Verarbeitungs- und/oder Verdichtungstemperaturen des Asphaltmischguts und deren Gemischen.

11. Asphaltmischgut nach einem der Ansprüche 1 bis 10, umfassend:
- von 8 bis 45 Gewichts-%, vorzugsweise von 10 bis 30 Gewichts-%, Petrolkoks,
- 10 bis 65 Gewichts-%, vorzugsweise 15 bis 50 Gewichts-%, grobe Zuschlagstoffe, die eine Teilchengröße von 6,3 mm oder mehr aufweisen,
- 10 bis 65 Gewichts-%, vorzugsweise 12 bis 40 Gewichts-%, mittlere Zuschlagstoffe, die eine Teilchengröße von mehr als 2 mm und weniger als 6,3 mm aufweisen,
- 5 bis 65 Gewichts-%, vorzugsweise 10 bis 50 Gewichts-%, an feinen Körnern, die eine Teilchengröße von 63 µm bis 2 mm aufweisen,
- von 0 bis 10 Gewichts-%, vorzugsweise von 0 bis 5 Gewichts-%, Feinstoffe, die eine Teilchengröße von weniger als 63 µm aufweisen;
- von 2 bis 20 Gewichts-%, vorzugsweise von 2 bis 10 Gewichts-%, kohlenwasserstoffhaltiges Bindemittel, und
- von 0 bis 20 Gewichts-% an Zusatzstoffen.

12. Asphaltmischgut nach einem der Ansprüche 1 bis 10, umfassend:
- von 8 bis 40 Gewichts-%, vorzugsweise von 10 bis 30 Gewichts-%, Petrolkoks,
- 5 bis 55 Gewichts-%, vorzugsweise 10 bis 40 Gewichts-%, grobe Zuschlagstoffe, die eine Teilchengröße von 6,3 mm oder mehr aufweisen,
- 5 bis 55 Gewichts-%, vorzugsweise 10 bis 40 Gewichts-%, mittlere Zuschlagstoffe, die eine Teilchengröße von mehr als 2 mm und weniger als 6,3 mm aufweisen,
- 5 bis 50 Gewichts-%, vorzugsweise 10 bis 40 Gewichts-%, an feinen Körnern, die eine Teilchengröße von 63 µm bis 2 mm aufweisen,
- von 5 bis 40 Gewichts-%, vorzugsweise von 8 bis 35 Gewichts-%, Feinstoffe, die eine Teilchengröße von weniger als 63 µm aufweisen;
- von 2 bis 20 Gewichts-%, vorzugsweise von 5 bis 15 Gewichts-%, kohlenwasserstoffhaltiges Bindemittel, und
- von 0 bis 20 Gewichts-% an Zusatzstoffen.

13. Verfahren zum Herstellen eines Asphaltmischguts nach einem der Ansprüche 1 bis 12, umfassend das Mischen von Petrolkoks, Zuschlagstoffen und kohlenwasserstoffhaltigem Bindemittel bei einer Temperatur von 100 bis 220 °C.

14. Verfahren nach Anspruch 13, wobei die Temperatur des Gemischs durch Erhitzen der Zuschlagstoffe und/oder des Petrolkoks auf eine Temperatur von 100 bis 220 °C vor dem Mischen mit dem kohlenwasserstoffhaltigen Bindemittel bereitgestellt wird.

15. Verwendung eines Asphaltmischguts nach einem der Ansprüche 1 bis 12 in der Straßenbauindustrie zum Herstellen von Tragschichten, Binderschichten und/oder Unterlagschichten für Fahrbahnen oder zum Beschichten von Böden.

## Claims

1. A bituminous mix comprising at least 50 % by weight of aggregates, at least 8 % by weight of petroleum coke and at least one hydrocarbon binder.

2. The bituminous mix according to claim 1, wherein the weight ratio of the petroleum coke to the hydrocarbon binder is 1.8 or higher, preferably 2 or higher.

3. The bituminous mix according to claim 1 or 2, comprising from 8 to 45 % by weight, preferably 10 to 30 % by weight, of petroleum coke.

4. The bituminous mix according to any one of claims 1 to 3, wherein the petroleum coke has a maximum particle size of 20 mm or less, preferably of 5 mm or less.

5. The bituminous mix according to any one of claims 1 to 3, wherein the petroleum coke has a maximum particle size of less than 63 µm.

6. The bituminous mix according to any one of claims 1 to 5, wherein the aggregates are selected from the group consisting of coarse aggregates having a particle size of 6.3 mm or greater, medium aggregates having a particle size greater than 2 mm and less than 6.3 mm, fine aggregates having a particle size of 63 µm to 2 mm, fines having a particle size of less than 63 µm, and combinations thereof; and/or wherein the bituminous mix comprises from 50 to 90 % by weight, preferably 60 to 85 % by weight, of aggregates.

7. The bituminous mix according to any one of claims 1 to 6, comprising as aggregates:
- from 0 to 90 % by weight, preferably 5 to 65 % by weight, of coarse aggregates having a particle size of 6.3 mm or greater;
- from 0 to 90 % by weight, preferably 5 to 65 % by weight, of medium aggregates having a particle size greater than 2 mm and less than 6.3 mm;
- from 0 to 70 % by weight, preferably 5 to 65 % by weight, of fine aggregates having a particle size of 63 µm to 2 mm; and
- from 0 to 40 % by weight, preferably 0 to 20 % by weight, of fines having a particle size of less than 63 µm;
relative to the total weight of the bituminous mix.

8. The bituminous mix according to any one of claims 1 to 7, comprising from 2 to 20 % by weight, preferably 5 to 15 % by weight, of hydrocarbon binder.

9. The bituminous mix according to any one of claims 1 to 8, wherein the hydrocarbon binder is selected from the group consisting of bitumens, pitch, light-coloured binders and mixtures thereof.

10. The bituminous mix according to any one of claims 1 to 9, further comprising from 0 to 20 % by weight of additives, preferably selected from the group consisting of colouring agents, anti-caking compounds, emulsifying agents, reinforcing fibres such as cellulose fibres, glass fibres, metal fibres, anti-stripping agents, additives for lowering temperatures of production, application and/or compacting of the bituminous mix, and mixtures thereof.

11. The bituminous mix according to any one of claims 1 to 10, comprising:
- from 8 to 45 % by weight, preferably 10 to 30 % by weight, of petroleum coke;
- from 10 to 65 % by weight, preferably 15 to 50 % by weight, of coarse aggregates having a particle size of 6.3 mm or greater;
- from 10 to 65 % by weight, preferably 12 to 40 % by weight, of medium aggregates having a particle size greater than 2 mm and less than 6.3 mm;
- from 5 to 65 % by weight, preferably 10 to 50 % by weight, of fine aggregates having a particle size of 63 µm to 2 mm;
- from 0 to 10 % by weight, preferably 0 to 5 % by weight, of fines having a particle size of less than 63 µm;
- from 2 to 20 % by weight, preferably 2 to 10 % by weight, of hydrocarbon binder; and
- from 0 to 20 % by weight of additives.

12. The bituminous mix according to any one of claims 1 to 10, comprising:
- from 8 to 40 % by weight, preferably 10 to 30 % by weight, of petroleum coke;
- from 5 to 55 % by weight, preferably 10 to 40 % by weight, of coarse aggregates having a particle size of 6.3 mm or greater;
- from 5 to 55 % by weight, preferably 10 to 40 % by weight, of medium aggregates having a particle size greater than 2 mm and less than 6.3 mm;
- from 5 to 50 % by weight, preferably 10 to 40 % by weight, of fine aggregates having a particle size of 63 µm to 2 mm;
- from 5 to 40 % by weight, preferably 8 to 35 % by weight, of fines having a particle size of less than 63 µm;
- from 2 to 20 % by weight, preferably 5 to 15 % by weight of hydrocarbon binder; and
- from 0 to 20 % by weight of additives.

13. A method for preparing a bituminous mix according to any one of claims 1 to 12, comprising the mixing, at a temperature ranging from 100 to 220°C, of the petroleum coke, aggregates and hydrocarbon binder.

14. The method according to claim 13, wherein the mixing temperature is supplied by heating the aggregates and/or the petroleum coke to a temperature of 100 to 220°C before they are mixed with the hydrocarbon binder.

15. Use of a bituminous mix according to any one of claims 1 to 12 in the road industry, for forming base courses, binder courses and/or sub-base layers for roadways, or for ground surfacing.
